# EUROPEAN PATENT APPLICATION

(11) **EP 4 535 124 A1**
(43) Date of publication of application: **09.04.2025**
(21) Application number: 23940930.3
(22) Date of filing: 23.08.2023
(51) Int. Cl.: G06F 1/16

(54) **INTERACTIVE FLAT-PANEL DISPLAY**

(71) Applicant: Guangzhou Shiyuan Electronics Co., Ltd., Guangzhou, Guangdong 510530 (CN); Guangzhou Shirui Electronics Co., Ltd., Guangzhou, Guangdong 510663 (CN)
(72) Inventor: TAN, Jinghuan, Guangzhou, Guangdong 510530 (CN); XIA, Yunhui, Guangzhou, Guangdong 510530 (CN); DENG, Bingjie, Guangzhou, Guangdong 510530 (CN); HONG, Guofeng, Guangzhou, Guangdong 510530 (CN)
(74) Representative: Grünecker Patent- und Rechtsanwälte PartG mbB
(86) International application number: PCT/CN2023/114463
(87) International publication number: WO 2025/039223

(57) **Abstract**

The present disclosure provides an interactive board, relates to the technical field of electronic devices. The interactive board includes a frame body and a backboard, the backboard is fixedly connected with the frame body, and the frame body is at least partially located on an outer side of the backboard, so that a rear side of the frame body is at least partially exposed from the outer side of the backboard and forms an installation part. The interactive board of the present disclosure further includes an antenna component, the antenna component is installed on the installation part. In a main view direction of the interactive board, the antenna component is completely covered by the frame body, or the frame body and the back plate. There is no need to open a through hole on the frame body corresponding to the position of the antenna component, thereby saving corresponding production and manufacturing processes, while also enhancing the structural strength of the frame body and improving the overall visual effect of the product, and meanwhile saving the required clearance region reserved for the antenna component by the frame body, reducing its volume, improving the compactness of the frame body structure, and facilitating the application of narrow frame products.

## Description

### TECHNICAL FIELD

The present disclosure relates to the technical field of electronic devices, and in particular to an interactive board.

### BACKGROUND

In related technologies, interactive boards are generally equipped with module components such as antenna modules and human detection modules to provide different interactive functions.

Taking the example of an interactive board with an antenna module inside, the antenna module is arranged inside the device frame. By arranging a corresponding fixing structure between the antenna module and the device frame, the antenna module may be relatively fixed to the device frame. In order to prevent antenna signals from being blocked and interfered by the frame, a corresponding clearance region needs to be reserved inside the device frame for the antenna module, and the device frame needs to be opened with a through-hole corresponding to the antenna module.

However, in the installation structure of the antenna module mentioned above, the through-hole arranged on the device frame not only reduces the overall visual effect of the product, but also affects the structural strength of the device frame, making the product prone to deformation during transportation or use. Moreover, due to the need to reserve a clearance region within the device frame, the antenna module located within the device frame requires a significant amount of layout space, which is not conducive to the design of narrow frame products.

### SUMMARY

The purpose of the present disclosure is to provide an interactive board in order to solve problems of the strength of the device frame structure of the interactive board being affected by the installation structure of the antenna module, and the antenna module occupying a large installation space within the device frame.

In order to solve the above technical problems, the present disclosure adopts the following technical solutions:
an interactive board is provided, which includes:
a frame body;
a backboard, fixedly connected with the frame body, where the frame body is at least partially located on an outer side of the backboard, so that a rear side of the frame body is at least partially exposed from the outer side of the backboard and forms an installation part; and
an antenna component, installed on the installation part, where the antenna component is completely blocked by the frame body, or the frame body and the backboard in a main viewing direction of the interactive board.

The beneficial effects of the present disclosure are: the backboard of the interactive board is connected with one side of the frame body, so that the back side of the frame body can be exposed from the outer side of the backboard and form an installation part for providing an installation position of the antenna component. When the antenna component is installed on the installation part, in the main viewing direction of the interactive board, the antenna component is completely covered by the frame body or the frame body and the backboard, and there is no need to open a through hole on the frame body corresponding to the position of the antenna component, thereby saving corresponding production and manufacturing processes, while also enhancing the structural strength of the frame body and improving the overall visual effect of the product;
the antenna component is located on the rear side of the frame body, so that the antenna component can be exposed from outside the frame body (rear side). The antenna component is located outside the frame body, saving the required clearance region reserved for the antenna component by the frame body, reducing its volume, improving the compactness of the frame body structure, and facilitating the application of narrow frame products.

### BRIEF DESCRIPTION OF THE DRAWINGS

Hereinafter, a further detailed explanation of the present disclosure is made based on the accompanying drawings and embodiments.
Fig. 1 is a schematic diagram of a front structure of an interactive board according to an embodiment of the present disclosure.
Fig. 2 is a schematic diagram of a rear structure of an interactive board according to an embodiment of the present disclosure.
Fig. 3 is one of the exploded views of an assembly structure of an antenna component according to an embodiment of the present disclosure.
Fig. 4 is another of the exploded views of an assembly structure of the antenna component according to an embodiment of the present disclosure.
Fig. 5 is a schematic diagram of a partial internal structure of the interactive board according to an embodiment of the present disclosure.
Fig. 6 is a schematic diagram of an assembly structure of an antenna component and antenna bracket according to an embodiment of the present disclosure.
Fig. 7 is a schematic diagram of an antenna bracket structure according to an embodiment of the present disclosure.
Fig. 8 is a A-A cross-sectional view of Fig. 7.

In the figure: 10. Frame body; 11. Installation part; 12. Threaded hole; 13. Fixing screws; 14. First positioning concave part; 15. Second pocket hole; 20. Backboard; 21. First pocket hole; 30. Antenna component; 31. Dielectric substrate; 311. Second positioning concave part; 32. Antenna unit; 321. First antenna; 322. Second antenna; 40. Antenna bracket; 41. Fixing arm; 411. Positioning hole; 412. First positioning convex part; 42. Fixing groove; 421. Buckle structure; 4211. Elastic arm; 4212. Fastener; 4213. Installation gap; 422. Second positioning convex part; 50. Antenna cover plate; 51. Clearance; 60. Screen; 61. Display region; 62. Black border region.

### DESCRIPTION OF THE PREFERRED EMBODIMENTS

In order to make the technical problem solved, the technical solution adopted, and the technical effect achieved by the present disclosure clearer, the technical solution of the embodiments of the present disclosure will be further described in detail with reference to the accompanying drawings. Obviously, the described embodiments are only a part of the embodiments of the present disclosure, not all of them. Based on the embodiments in the present disclosure, all other embodiments obtained by those skilled in the art without creative labor are within the scope of protection of the present disclosure.

In the description of the present disclosure, unless otherwise specified and limited, the terms "connected" and "fixed" should be broadly understood, for example, it may be fixed connections, detachable connections, or integrated; or it may be a mechanical connection or an electrical connection; or it may be directly connected or indirectly connected through an intermediate medium; or it may be a connection within two components or an interaction relationship between two components. For those skilled in the art, the specific meanings of the above terms in the present disclosure may be understood in specific situations.

In the present disclosure, unless otherwise specified and limited, a first feature "above" or "below" a second feature may include direct contact between the first and second features, or may include contact between the first and second features through another feature between them instead of direct contact. Moreover, the first feature being "above", "over", and "on" the second feature includes the first feature being directly above and diagonally above the second feature, or simply indicating that the first feature is horizontally higher than the second feature. The first feature being "below", "underneath", and "under" includes the first feature being directly below and diagonally below the second feature, or simply indicating that the first feature is horizontally lower than the second feature.

In related technologies, interactive boards are generally equipped with module components such as antenna modules and human detection modules to provide different interactive functions.

Taking the example of an interactive board with an antenna module inside, it is known from the background technology that the antenna module is arranged inside the device frame. By arranging a corresponding fixing structure between the antenna module and the device frame, the antenna module may be relatively fixed to the device frame. In addition, in order to prevent antenna signals from being blocked and interfered by the frame, a corresponding clearance region needs to be reserved inside the device frame for the antenna module, and a through-hole corresponding to the antenna module needs to be opened on the device frame.

However, in the installation structure of the antenna module mentioned above, the through-hole arranged on the device frame not only reduces the overall visual effect of the product, but also affects the structural strength of the device frame, making the product prone to deformation during transportation or use. Although a part of interactive board products may cover the through holes by attaching a MYLAR piece, it is evident that due to the different materials of the MYLAR piece and the device frame, it still affects the overall visual effect of the product. Moreover, over time, the MYLAR piece on the device frame is prone to failure and detachment, resulting in low reliability. Moreover, due to the need to reserve a clearance region within the device frame, the antenna module located within the device frame requires a significant amount of layout space, which is not conducive to the design of narrow frame products. Therefore, this implementation method provides the following solution.

This embodiment provides an interactive board, and it may be understood that the installation structure of the antenna component 30 applied to the interactive board may also be applied to other electronic devices. The electronic devices described in this embodiment are generally devices that use electronic technology (including software) to achieve human-computer interaction functions to a certain extent, including but not limited to electronic computers, robots, display terminals, etc.

Interactive boards may be used as display devices such as conference tablets, smart blackboards, and commercial displays. They may also be applied to display devices such as televisions and computer screens. Interactive boards may operate the content displayed on the screen and achieve human-computer interaction through touch technology. They integrate one or more functions such as projectors, whiteboards, screens, speakers, televisions, and video conferencing terminals. In practical applications, the hardware part of the interactive board consists of a touch film group, a screen 60, and a control unit, which are combined by the overall structural components and supported by a dedicated software system. The screen 60 cooperates with the touch component to achieve display and touch functions. Users may perform touch operations on the display screen through their fingers or a stylus. The intelligent processing system generates handwriting based on the input touch operations of users and displays it on the display screen, or generates control operations based on the input touch operations of users to process the display content on the display screen.

**In** response to the technical issues mentioned above, the interactive board has made changes and optimizations to the assembly structure between the antenna component 30 and the frame body 10, thereby solving a series of problems such as low structural strength and large size of the frame body 10.

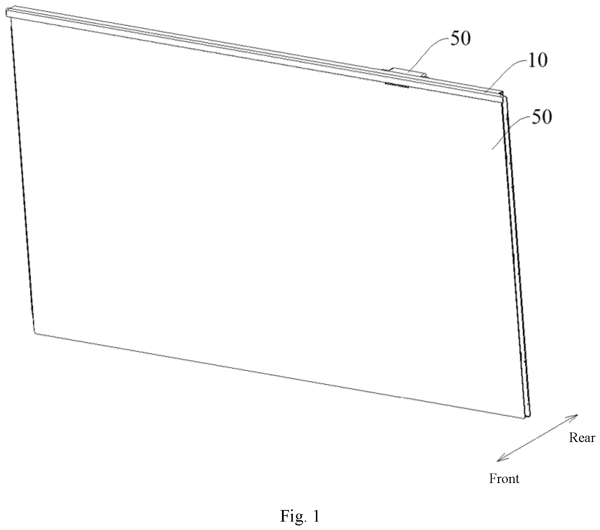

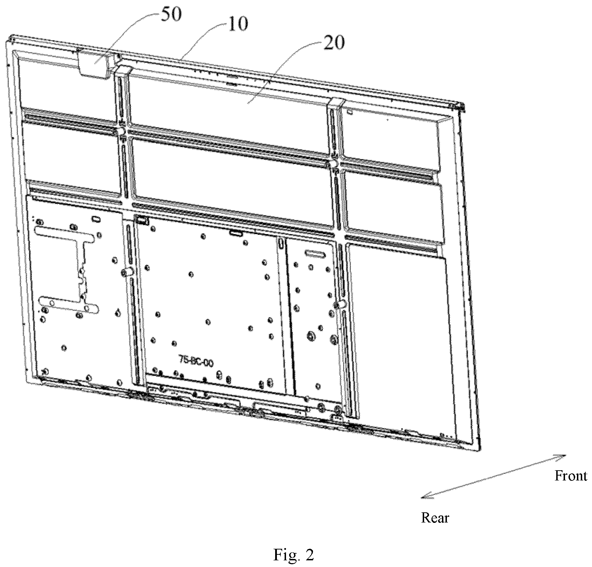

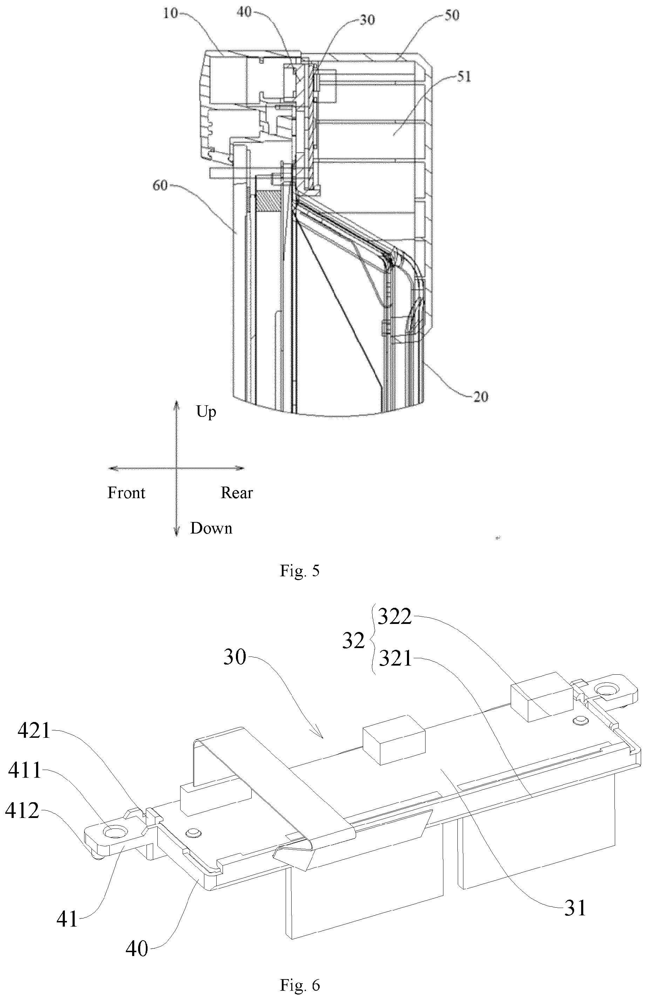

Referring to Figs. 1-5, the interactive board includes the frame body 10, and the frame body 10 may be made of insulating material such as plastic to avoid interference with the signal transmission and reception performance of the antenna component 30. **In** order to ensure that the structural strength of the interactive board meets the product design requirements, the frame body 10 may also be made of materials with strong conductivity such as metal, such as aluminum, stainless steel, etc., as long as the antenna component 30 is provided with a corresponding clearance region casing.

In an embodiment, the frame body 10 may be a profile frame or a sheet metal frame. From the cross-sectional structure of both, the profile frame generally has a closed frame structure, which is mainly processed by extrusion molding technology. The side of the sheet metal frame is generally an open structure, which is mainly processed and formed by bending, rolling, stamping and other processes. Taking the frame body 10 as an example of a profile, the frame body 10 may be a through structure to form a space for accommodating various functional modules inside the frame body 10, or to provide a corresponding clearance region for the antenna component 30. On the rear side of the frame body 10 (i.e. the direction "rear" indicated by the arrow in the figure), a clearance hole may be arranged through the side wall of the frame body 10 to connect the above-mentioned accommodation space with the external environment of the frame body 10. Whether a clearance hole needs to be opened on the frame body 10, as well as the specific structure and position of the clearance hole, may be determined based on the requirements of the antenna component 30 located on the interactive board and the electronic device being applied. Generally, the pocket hole is usually opened in the region arranged by the antenna component 30 which is not specifically limited in this embodiment.

As shown in Figs. 1-5, according to the above implementation, in order to facilitate the understanding of this scheme, for the structure of the interactive board, the interactive board is further provided with a screen 60, and the frame body 10 is enclosed to define a display region 61, so that the screen 60 may cover the display region 61 in a connected state with the border body 10, thereby providing image display function. It should be understood that the screen 60 includes LED (Light Emitting Diode) display screen, OLED (Organic Light Emitting Diode) display screen, LCD (Liquid Crystal Display) display screen, etc. The interactive board provides image display function through a side of the screen 60, and the direction in which the screen 60 faces is the front side of each component in this embodiment, which is the direction "front" indicated by the arrow in the figure, while the side away from the screen 60, which is the side facing the backboard 20 in this embodiment, is the rear side of each component, which is the direction "rear" indicated by the arrow in the figure.

The interactive board further includes a backboard 20 arranged on the rear side of the interactive board. In an embodiment, the backlight module of the interactive board may be fixed on the front side of the backboard 20. The interactive board provides the required brightness for image display to the screen 60 through the backlight module and provides protection to a certain extent to the rear side of the interactive board.

**In** an embodiment, the backboard 20 and the frame body 10 may be integrated into one piece, and the two may be processed through integrated molding processes such as sheet metal, injection molding, 3D printing, casting, etc.

Sequentially referring to Figs. 1-5, in this embodiment, the frame body 10 and the backboard 20 are independently processed and manufactured (such as the frame body 10 being manufactured by extrusion process and the backboard 20 being manufactured by sheet metal process), and then assembled and combined through corresponding installation structures to reduce the processing difficulty of the frame body 10 and the backboard 20. At the same time, it is also suitable for the production and manufacturing of different materials for the frame body 10 and the backboard 20. In general, in order to ensure the product integrity of the interactive board, the backboard 20 is generally fixedly connected with the rear side of the frame body 10, so that the seam between the frame body 10 and the backboard 20 in the main viewing direction of the interactive board will not be connected to the rear side of the interactive board, avoiding light leakage and other situations on the rear side of the interactive board.

In order to ensure good protection performance for the rear side of the interactive board and enable the backlight module arranged on the front side of the backboard 20 to provide the necessary illumination for image display of the entire screen 60, similar to the structural form of the screen 60 located on the interactive board, the frame body 10 is at least partially located on the outer side of the backboard 20, so that the rear side of the frame body 10 is at least partially exposed from the outer side of the backboard 20 and forms the installation part 11. In this example, the structure of the backboard 20 is similar to that of the screen 60, so that the frame body 10 may be arranged along the outer periphery of the screen 60 and the backboard 20 while enclosing the display region 61, thereby forming the outer peripheral structure of the interactive board.

The interactive board further includes an antenna component 30 on the basis of the above structure, and the antenna component 30 may be used to support wireless communication within one or more wireless communication frequency bands, that is, the antenna component 30 may be used to transmit and receive RF signals, integrating functions including but not limited to WIFI, Bluetooth, network, etc.

In order to solve the basic problem proposed in this embodiment and reduce the overall visual confusion of the interactive board product, the antenna component 30 is assembled externally to the frame body 10 and the backboard 20. For example, the antenna component 30 is installed on the installation part 11 of the frame body 10, so that in the main viewing direction of the interactive board, the antenna component 30 may be completely blocked by the frame body 10, or completely blocked by the frame body 10 and the backboard 20. By adopting this type of arrangement, the antenna component 30 as a whole can be exposed from outside the basic structure of the interactive board. In this embodiment, only the front side of the antenna component 30 is blocked by the frame body 10, or blocked by the frame body 10 and the backboard 20. Compared with the antenna structure in the interactive board of related technologies, this embodiment greatly reduces the blocking surface of the antenna component 30. Except for its front side, the antenna component 30 is not blocked by the frame body 10 and the backboard 20, whether it is the upper, lower or rear sides, so that the outside of the antenna component 30 has sufficient clearance region, minimizing the impact of the interactive board on the performance of the antenna component 30, and avoiding the signals received and/or transmitted by the antenna component 30 from being blocked or weakened by the screen 60, or the frame and backboard 20.

In the above embodiment, if the portion of the antenna component 30 used for transmitting and/or receiving RF signals is located on the rear side of the frame body 10, the rear side of the frame body 10 may be provided with the above-mentioned pocket hole corresponding to the position of the antenna component 30, in order to provide sufficient clearance region for the front side of the antenna component 30 through the pocket hole and the internal accommodating space of the frame body 10. When the part of the antenna component 30 used for transmitting and/or receiving RF signals is located on the rear side of the backboard 20, an pocket hole corresponding to the position of the antenna component 30 may be opened on the rear side of the backboard 20, so that RF signals may be transmitted and received through the front side of the display screen. At this time, the signal transmission and reception region of the antenna component 30 may be arranged facing a non-display region 61 of the screen 60 to further reduce the signal interference of the screen 60 on the antenna component 30.

In the above implementation, regardless of whether the part of the antenna component 30 used for transmitting and/or receiving RF signals is located on the rear side of the frame body 10 or the rear side of the backboard 20, there is no need to open corresponding through-hole structures at the position of the antenna component 30 on the front side of the frame body 10. This can save the process steps required for the interactive board in the production and manufacturing process, and also reduce the assembly accuracy requirements between the antenna component 30 and the frame body 10 during the assembly process. The assembly personnel do not need to accurately align the through-hole of the antenna component 30 and the front side of the frame body 10, which reduces the assembly difficulty of the interactive board. In addition, the front side of the frame body 10 does not need to have a through-hole structure at the position corresponding to the position of the antenna component 30, thereby improving the integrity of the frame body 10 structure and enhancing the structural strength of the frame body 10. The frame body 10 does not need to be reinforced by enhancing material strength or other means of enhancing structural strength, which can also save the manufacturing and material costs of the frame body 10 accordingly. The frame body 10 with the above structure can also improve the overall visual effect of interactive board products, and there is no need to cover the corresponding structure on the frame body 10 by attaching a MYLAR piece, thus meeting the aesthetic needs of some users for the product.

In addition, the antenna component 30 is located on the rear side of the frame body 10, or the rear side of the frame body 10 and the backboard 20, and is arranged outside the interactive board, that is, the frame body 10 does not need to reserve the required clearance region for the antenna component 30, or the clearance region reserved for the antenna component 30 inside the frame body 10 can be correspondingly reduced, so that the width and thickness dimensions of the frame body 10 can be narrowed, which is conducive to the application of narrow frame products.

It should be noted that in the interactive board products of related technologies, the outer peripheral shapes of the screen 60 and the backboard 20 are generally rectangular, and correspondingly, the frame body 10 located on the screen 60 and the backboard 20 also includes frame parts placed on the top, bottom, left, and right sides of the screen 60 and the backboard 20, respectively. In another embodiment, the screen 60 and the backboard 20 of the interactive board may also be designed into irregular shapes such as polygons according to usage scenarios or other factors. This example continues to take the rectangular structure of the interactive board as an example. Generally, the frame body 10 located on the lower side of the interactive board is larger in size and volume compared to the frame bodies 10 on the upper, left, and right sides. Correspondingly, the internal storage space provided by the lower frame body 10 is also larger, and is configured to accommodate functional modules with different functions, such as the sound pickup module, speaker module, camera module, and the antenna component 30 according to this embodiment. In addition, the motherboard used for electrical connection with the screen 60 is also arranged at a lower position of the interactive board. Taking into account various factors, during the use of the interactive board, each functional module and the screen 60 (including the motherboard) constitute certain interference affect on the transmission and reception of the signal of the antenna component 30, therefore, the interactive board of this embodiment installs the antenna component 30 on the rear side of the frame body 10 located on the upper side of the interactive board, so that the antenna component 30 can form a large assembly distance with other functional modules and electronic components such as the motherboard of the interactive board, thereby reducing the interference caused by various functional modules and electronic components on the antenna module.

Based on the principles of the above embodiments, in another embodiment, the antenna component 30 may also be arranged on the rear side of the frame body 10 located on the left or right side of the interactive board.

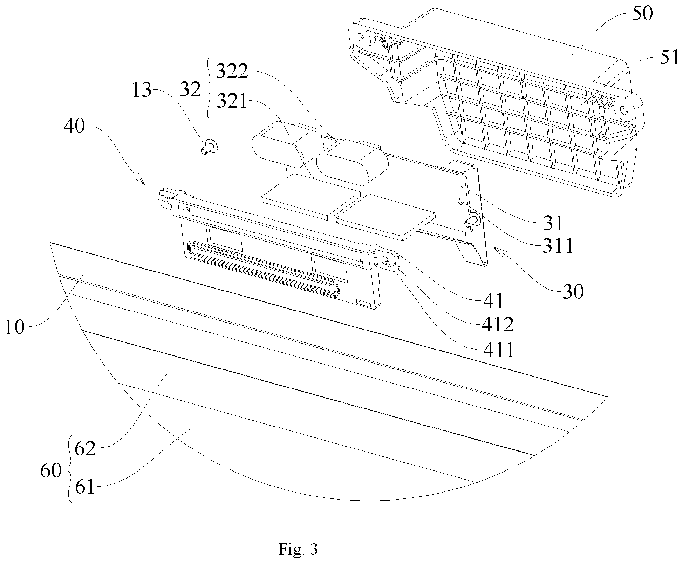

In this embodiment, since the antenna component 30 is installed externally on the frame body 10, the antenna component 30 cannot be installed on the interactive board by relying on the frame body 10. Sequentially referring to Figs. 3-5, in this example, the antenna component 30 needs to be arranged on the frame body 10 through the antenna bracket 40, and the antenna bracket 40 serves as the supporting body for the antenna component 30 located on the frame body 10. In the assembled state with the frame body 10 and the antenna component 30, the antenna bracket 40 is located between the frame body 10 and the antenna component 30.

One side of the antenna bracket 40 is installed on the installation part 11 of the frame body 10, while the antenna component 30 is installed on the side of the antenna bracket 40 facing away from the installation part 11. Additionally, the front side of the antenna bracket 40 is fixedly fitted with the frame body 10, and the antenna component 30 is installed on the rear side of the antenna bracket 40, so that the antenna component 30 is exposed from the rear side of the antenna bracket 40, ensuring that the structure meets the condition of the antenna component 30 being external to the frame body 10, and avoiding the existence of the antenna bracket 40 from affecting the disassembly and assembly of the antenna component 30 on the interactive board.

In an embodiment, the antenna bracket 40 and the frame body 10 may be integrated as a single piece. In this scheme, the antenna component 30 may also be directly fixed to the rear side of the frame body 10. However, it is obvious that the solution of designing the antenna bracket 40 as a single piece on the frame body 10 cannot be met based on the extrusion process used for the frame body 10. The antenna bracket 40 and the frame body 10 need to be processed and formed using injection molding, 3D printing, casting and other processes. Therefore, the antenna bracket 40 and the frame body 10 of this embodiment are two components formed by independent processing, and are fitted with each other through corresponding assembly structures in the future. For example, the frame body 10 remains formed by extrusion process, while the antenna bracket 40 is formed by injection molding, 3D printing and other processes.

In an embodiment, the antenna bracket 40 and the antenna component 30, as well as the antenna bracket 40 and the frame body 10, may be configured in a fitting manner that cannot be disassembled after installation, so as to ensure that the antenna component 30 can be relatively stably arranged on the interactive board in the state of being installed on the frame body 10 through the antenna bracket 40, and to avoid affecting the assembly strength of the antenna component 30 on the frame body 10 due to its external form. In this embodiment, both the antenna bracket 40 and the antenna component 30, as well as the antenna bracket 40 and the frame body 10, are assembled in a detachable manner. On the basis that any two are detachable, it is ensured that the antenna bracket 40 can be stably arranged on the frame body 10, and the antenna component 30 can be stably placed on the antenna bracket 40. On the basis of meeting the requirement that the antenna component 30 can be stably placed on the frame body 10, the antenna component 30 and the antenna bracket 40 can be disassembled and replaced on the interactive board, extending the service life of the interactive board.

In the above embodiment, a first fixing structure is provided between the antenna bracket 40 and the frame body 10, and the antenna bracket 40 may be removably installed on the installation part 11 through the first fixing structure. The first fixing structure needs to meet the requirement of being detachable in a stable installation state between the antenna bracket 40 and the frame body 10, that is, the first fixing structure may be arranged as a threaded connection structure, a buckle connection structure, a plug-in fixation, etc. between the antenna bracket 40 and the frame body 10.

Furthermore, referring to Figs. 3-4, in the state where the antenna component 30 is fitted with the antenna bracket 40, the first fixing structure is at least partially exposed from the rear side of the interactive board, so that personnel can operate the first fixing structure from the rear side of the interactive board. For example, in the case where the first fixing structure is a threaded connection structure, the screw head may be exposed through the rear side of the interactive board; in the case where the first fixing structure is a buckle connection structure, the part used to operate the buckle retraction or the part used to apply disassembly direction movement to the buckle needs to be exposed on the rear side of the interactive board; in the case where the first fixing structure is a plug-in fixing structure, the part used to apply disassembly direction movement to the plug-in structure needs to be exposed on the rear side of the interactive board. In order to meet the disassembly and assembly requirements of antenna bracket 40 and frame body 10.

Referring to Figs. 3-4, as an implementation of the first fixing structure, the first fixing structure of this embodiment adopts a threaded connection structure. Additionally, the first fixing structure includes threaded holes 12 opened on the frame body 10, fixing arms 41 arranged on the antenna bracket 40, and a fixing hole located on the fixing part. In the assembled state of the antenna bracket 40 and the frame body 10, the antenna bracket 40 is abut against the rear side of the frame body 10 through the fixing arm 41, so that the positioning hole 411 on the fixing arm 41 can be in a matching state with the threaded hole 12 located on the rear side of the frame body 10. Herein, the aperture size of the positioning hole 411 needs to be arranged to be larger than that of the threaded hole 12, so that a fixing screw 13 may pass through a positioning hole 411 from the rear side to the front side of the fixing arm 41 and be threaded with the threaded hole 12. It should be understood that the aperture of the positioning hole 411 needs to be set to be smaller than the screw head of the fixing screw 13 and larger than the threaded section of the fixing screw 13, to ensure that after the fixing screw 13 is screwed into the threaded hole 12 through its threaded section, the screw head of the fixing screw 13 cannot pass through the positioning hole 411, that is, the fixing screw 13 may be abut against the rear side of the fixing arm 41 through its screw head, and the antenna bracket 40 may be pushed forward (towards the direction of the frame body 10) as a whole, so that the antenna bracket 40 is finally stably assembled on the rear side of the frame body 10.

On the basis of the above structural form, in an embodiment, in order to make the assembly relationship between the antenna bracket 40 and the frame body 10 more reliable and stable, the first fixing structure includes threaded holes 12 opened on the frame body 10 and located on the opposite sides of the installation part 11. It may be understood that in this example, there are at least two threaded holes 12. On the basis of ensuring that the frame body 10 is located on the opposite sides of the installation part 11 and has threaded holes 12, the frame body 10 may also correspondingly open multiple threaded holes 12 spaced apart from each other on the periphery of the installation part 11. Correspondingly, the antenna bracket 40 is equipped with fixing arms 41 and positioning holes 411 corresponding to the number and position of the threaded holes 12 opened on the frame body 10, so that each positioning hole 411 can be aligned and fitted with each threaded hole 12 when the antenna bracket 40 is close to the installation part 11. This improves the assembly stability between the antenna bracket 40 and the frame body 10 while the fixing screws 13 are fixed in each positioning hole 411 and threaded hole 12, and also meets the requirement of detachable antenna bracket 40 and frame body 10.

In addition, in the above embodiment, in order to control the width dimension of the frame body 10 (the distance between the inner side of the frame body 10 and the outer side of the frame body 10), the width dimension of the frame body 10 is reduced to make the interactive board more conducive to the current trend of narrow frame design. In this example, each threaded hole 12 is spaced along the length direction of the frame body 10.

In the above embodiment, the purpose of positioning the antenna bracket 40 with the frame body 10 by arranging an outward extending fixing arm 41 is to allow the fixing arm 41 to be exposed on the rear side of the interactive board in the state where the frame body 10, antenna bracket 40, and antenna component 30 are fitted with each other, in order to avoid the fixing arm 41 being blocked by the antenna component 30 when the antenna component 30 is assembled on the antenna bracket 40.

In the embodiment where the portion of the antenna component 30 used for transmitting and receiving RF signals is located on the rear side of the frame body 10, that is, in the embodiment where the rear side of the frame body 10 corresponds to the antenna component 30 and is provided with a pocket hole, the installation part 11 of the frame body 10 is located on the periphery of the pocket hole. In the state where the antenna bracket 40 is fitted with the frame body 10, the antenna bracket 40 is overlapped on the rear side of the frame body 10 through the fixing arm 41, and the fixing arm 41 may play a role in limiting the front side of the antenna bracket 40 to a certain extent. In this embodiment, the fixing arm 41 is provided with two threaded holes 12 correspondingly, and the two fixed arms 41 are respectively arranged at the opposite ends of the antenna bracket 40 to avoid the antenna bracket 40 being inserted into the accommodating space of the frame body 10 through the pocket hole, thereby affecting the assembly accuracy of the antenna component 30 on the frame body 10 and ensuring that the antenna component 30 can provide good signal transmission and reception functions.

The above embodiment provides a stable installation of the antenna bracket 40 on the frame body 10, and allows the antenna bracket 40 to be disassembled from the frame body 10. During the assembly process of the antenna bracket 40 with the frame body 10, in order to achieve rapid positioning between the positioning hole 411 and the threaded hole 12, the assembly position of the antenna bracket 40 and the subsequently assembled antenna component 30 on the frame body 10 is relatively accurate. In this example, a first positioning structure is provided between the antenna bracket 40 and the frame body 10, and the antenna bracket 40 is positioned and fitted with the frame body 10 through the first positioning structure. In an embodiment, the first positioning structure may be arranged as a limit plate (not shown in the figure) fixed on the antenna bracket 40. In the embodiment where the antenna bracket 40 is arranged on the upper side of the frame body 10, the antenna bracket 40 may be connected with the side (outer side) of the frame body 10 facing away from the backboard 20 through the limit plate, so as to achieve horizontal positioning with the frame body 10; alternatively, the first positioning structure may be arranged as convex and concave parts located on the antenna bracket 40 respectively (as shown in the figure), in order to achieve the positioning of the antenna bracket 40 on the frame body 10 by matching the convex and concave parts of the structure.

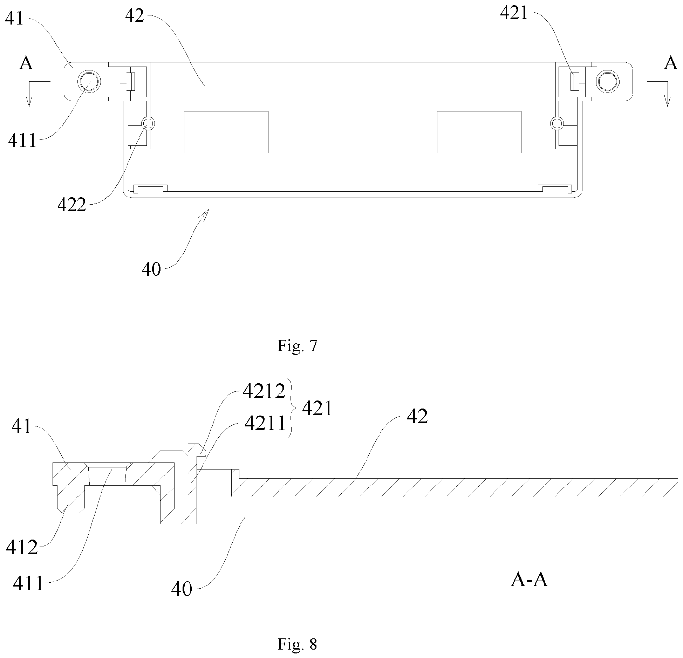

In this example, referring to Figs. 3-8, considering the narrow border design of the interactive board, the first positioning structure adopts the structure form of arranging the first positioning convex part 412 and the first positioning concave part 14 between the border body 10 and the antenna bracket 40 to avoid the situation where the first positioning structure protrudes outside the antenna bracket 40 and/or the border body 10.

Additionally, the first positioning convex part 412 is adapted to the structure of the first positioning concave part 14, both may be arranged as a protruding cylindrical structure and corresponding counterbore or through-hole structure, or as a protruding plate-shaped structure and corresponding groove, so that the antenna bracket 40 and the frame body 10 may be positioned and fitted with each other through the first positioning convex part 412 and the first positioning concave part 14 before being fixed by the first fixing structure. In this example, the first positioning convex part 412 and the first positioning concave part 14 are respectively arranged on the antenna bracket 40 and the frame body 10. In order to avoid affecting the width dimension of the frame body 10, the first positioning convex part 412 and the first positioning concave part 14 are located on the front side of the antenna bracket 40 and the rear side of the frame body 10, respectively. The extension direction of both is set to the front and rear direction of the interactive board, that is, the first positioning structure will not protrude from the outer side of the frame body 10 and the outer side of the antenna bracket 40.

According to the embodiment provided above, at least two arrangement manners of the first positioning convex part 412 and the first positioning concave part 14 are provided as follows.

Manner 1, the first positioning convex part 412 is protruded on the antenna bracket 40, and the first positioning concave part 14 is opened on the installation part 11.

Manner 2, the first positioning convex part 412 is protruded on the installation part 11, and the first positioning concave part 14 is opened on the antenna bracket 40.

However, this embodiment takes into account the fact that the antenna bracket 40 is generally processed and formed using injection molding and other processes, and the frame body 10 is formed through extrusion technology. Therefore, the additive process is easier to process and form on the antenna bracket 40. Similarly, the subtractive process such as drilling is easier to implement on the frame body 10 after extrusion molding. Compared with the solution of processing grooves on the antenna bracket 40 and processing protrusions on the frame body 10, it is obvious that adopting the above Manner 1 is more conducive to the processing of the interactive board in this solution, reducing processing difficulty and cost, and improving production efficiency.

In the above description of the first positioning structure, in the embodiment where the first fixing structure includes a fixing arm 41 provided on the antenna bracket 40, the first positioning convex part 412 is arranged on the fixing arm 41 and located on the side of the positioning hole 411, and correspondingly, the first positioning concave part 14 is opened on the mounting portion 11 of the frame body 10 and located on one side of the threaded hole 12.

According to the embodiment where the first fixing structure is provided between the antenna bracket 40 and the frame body 10 as described above, the antenna component 30 in this example includes a dielectric substrate 31 and an antenna unit 32. The dielectric substrate 31 may be a PCB board with various dielectric constants, and the dielectric substrate 31 may be a single-layer board, a two-layer board, or a multi-layer board. The dielectric substrate 31 may be used to carry various electronic components of the antenna component 30, as well as to arrange wiring layers for electrical connection of various electronic components. The antenna unit 32 is a unit component that may transmit and/or receive RF signals as described above, and the antenna unit 32 may include an antenna circuit arranged on the dielectric substrate 31 and an antenna radiator, arranged on the dielectric substrate 31, electrically connected to the antenna circuit. The antenna circuit is connected to the main board of the interactive board through communication to achieve signal transmission between the control unit and the antenna radiator. The antenna radiator is used to receive signals transmitted from the outside or transmitted signals transmitted from the antenna circuit to the antenna radiator to the outside of the interactive board.

As shown in Figs. 3-6, the dielectric substrate 31 serves as a carrier for the antenna component 30. The antenna component 30 is mounted on the antenna bracket 40 through the dielectric substrate 31, and the antenna unit 32 is located on the dielectric substrate 31 to achieve the signal reception and/or transmission function of the antenna component 30. In order to allow the antenna component 30 to be stably installed on the antenna bracket 40, a fixing groove 42 is provided on the rear side of the antenna bracket 40, which is structurally adapted to the dielectric substrate 31. The dielectric substrate 31 is accommodated in the fixing groove 42.

In an embodiment, when the dielectric substrate 31 is accommodated in the fixing groove 42, the antenna bracket 40 may be fixed to the dielectric substrate 31 and the antenna bracket 40 by abutting the groove wall of the fixing groove 42 against the edge of the dielectric substrate 31.

In this embodiment, the antenna bracket 40 and the dielectric substrate 31 are fitted with each other through a second fixing structure. It may be understood that due to the fact that the antenna component 30 generally uses a PCB board as the dielectric substrate 31, and the PCB board is not easy to process the relevant fixing structures, the second fixing structure of this embodiment is arranged on the fixing groove 42 of the antenna bracket 40, and the dielectric substrate 31 may be removably installed in the fixing groove 42 through the second fixing structure. In this example, the second fixing structure may be arranged as a fixing structure such as a buckle or a limit plate that may move relative to the antenna bracket 40.

In other embodiments, the second fixing structure may also be arranged in a similar structural form to the first fixing structure, for example, a first fixing hole (not shown in the figure) is arranged at the bottom of the fixing groove 42, and a second fixing hole (not shown in the figure) is opened on the dielectric substrate 31, so that the two may be fixed by threading through the fixing member. Alternatively, the second fixing structure may also be arranged as a guide groove opened on the groove wall of the fixing groove 42 or at other positions outside the guide groove, so that the dielectric substrate 31 may be inserted into the guide groove, move into the fixing groove 42 under the guidance of the guide groove, and be stably held in the fixing groove 42 by fixing it with the guide groove.

Sequentially referring to Figs. 3-4, and 6-8, in a specific implementation, the second fixing structure is a buckle structure 421 arranged on the fixing groove 42. The dielectric substrate 31 and the antenna bracket 40 are matched by the buckle structure 421, and the buckle structure 421 is located on the groove wall of the fixing groove 42 or on one side of the fixing groove 42. The buckle structure 421 includes an elastic arm 421 of which a first end is fixedly connected to the antenna bracket 40, and a second end extending backward, and a fastener 4212 which is fixed to the second end of the elastic arm 4211. The fastener 4212 protrudes from the elastic arm 4211 to form an installation gap 4213 between the buckle structure 421 and the groove bottom of the fixing groove 42, the installation gap 4213 is located between the portion of the fastener 4212 protruding from the elastic arm 4211 and the bottom of the fixing groove 42, the dielectric substrate 31 may be fixed in the installation gap 4213 through the buckle structure 421. During the installation process of the dielectric substrate 31 and the antenna bracket 40, the dielectric substrate 31 may be installed from the slot of the fixing groove 42 towards the bottom of the fixing groove 42. During this process, the dielectric substrate 31 will be abut against the fastener 4212 of the fastening structure 421, and a force will be applied to the fastener 4212 in the direction away from the dielectric substrate 31. Under the action of the dielectric substrate 31, the fastener 4212 drives the elastic arm 4211 to deform relative to the antenna bracket 40 in the direction away from the dielectric substrate 31. Finally, the buckle structure 421 moves to a state where the dielectric substrate 31 may be placed into the fixing groove 42. After the dielectric substrate 31 is placed into the fixing groove 42, the elastic arm 4211 will elastically return to the position of the fastener 4212 located on the side of the substrate 31 away from the bottom of the fixing groove 42 (on the rear side of the substrate 31) when the force of the substrate 31 is lost, so that the opposite sides (front side surface and rear side surface) of the dielectric substrate 31 may be restricted by the groove bottom of the fixing groove 42 and the buckle structure 421, respectively, while the outer side edge of the dielectric substrate 31 is restricted by the groove walls or elastic arms 4211 of the fixing groove 42. Similarly, when the dielectric substrate 31 needs to be disassembled on the antenna bracket 40, the user applies a force to the dielectric substrate 31 in the direction away from the fixing groove 42 at the bottom of the groove, or applies a force to the buckle structure 421 bracket in the direction away from the dielectric substrate 31, so that the buckle structure 421 may detach from the dielectric substrate 31 under external force or the action of the dielectric substrate 31, ultimately achieving the disassembly of the dielectric substrate 31 on the antenna bracket 40.

The above embodiment provides a stable installation of the dielectric substrate 31 on the antenna bracket 40, and allows the dielectric substrate 31 to be disassembled from the antenna bracket 40. In the process of assembling the dielectric substrate 31 with the antenna bracket 40, or in the state where the dielectric substrate 31 is fixed in the fixing groove 42 through the buckle structure 421, in order to ensure high positioning accuracy between the dielectric substrate 31 and the fixing groove 42, in this example, a second positioning structure is provided between the dielectric substrate 31 and the antenna bracket 40. During the process of assembling the dielectric substrate 31 to the antenna bracket 40, and in the state where the dielectric substrate 31 is accommodated in the fixing groove 42, the dielectric substrate 31 achieves positioning and coordination with the antenna bracket 40 through the second positioning structure. Unlike the first positioning structure, since the dielectric substrate 31 uses a PCB board, it is not easy to use additive manufacturing technology to process the second positioning structure on the dielectric substrate 31.

Therefore, in this embodiment, a second positioning convex part 422 and a second positioning concave part 311 are provided between the frame body 10 and the dielectric substrate 31. The second positioning convex part 422 is structurally adapted to the second positioning concave part 311, and both may be arranged as a protruding columnar structure and corresponding counterbore or through-hole structure, or both may arranged as a protruding plate-shaped structure and corresponding groove, so that the dielectric substrate 31 and the antenna bracket 40 may be positioned and fitted with each other through the second positioning convex part 422 and the second positioning concave part 311 before and after being fixed by the second fixing structure. Additionally, the second positioning convex part 422 and the second positioning concave part 311 are respectively arranged on the dielectric substrate 31 and the antenna bracket 40. In order to avoid affecting the width dimension of the antenna bracket 40, the second positioning convex part 422 and the second positioning concave part 311 are located on the rear side of the antenna bracket 40 and the front side of the dielectric substrate 31, respectively. The extension direction of both is set to the front and rear direction of the interactive plate, that is, the second positioning structure will not protrude from the outer side of the antenna bracket 40 and the outer side of the dielectric substrate 31.

According to the embodiment provided above, at least two arrangement manners of the second positioning convex part 422 and the second positioning concave part 311 are provided as follows.

Manner 1, the second positioning convex part 422 is protruded on the antenna bracket 40, and the second positioning concave part 311 is open on the dielectric substrate 31.

Manner 2, the second positioning convex part 422 is protruded on the dielectric substrate 31, and the second positioning concave part 311 is opened on the antenna bracket 40.

Unlike the first positioning structure, since the dielectric substrate 31 uses a PCB board, it is not easy to use additive manufacturing to process the second positioning structure on the dielectric substrate 31. However, the antenna bracket 40 is generally processed and formed using injection molding or other processes. Therefore, additive manufacturing is easier to process and form on the antenna bracket 40. Similarly, subtractive manufacturing such as drilling is easier to implement on the dielectric substrate 31. Compared with the solution of processing grooves on the antenna bracket 40 and processing protrusions on the dielectric substrate 31, it is obvious that using the above Manner 1 is more conducive to the processing of the interactive board in this solution, reducing processing difficulty and cost, and improving production efficiency.

According to the above embodiment, it may be seen that the antenna component 30 includes the dielectric substrate 31 and the antenna unit 32. In an embodiment, RF chips corresponding to the number of antenna units 32 are further provided on the dielectric substrate 31, or the RF chips may be provided on the motherboard of the interactive board. The RF chip may be a Wi-Fi RF chip, such as a Wi-Fi RF chip that supports 2.4G and 5G. The RF chip may also be other wireless communication chips such as Bluetooth.

In this example, the antenna unit 32 includes a first antenna 321 and a second antenna 322. The first antenna 321 and the second antenna 322 may be used to transmit and/or receive different RF signals, respectively. Correspondingly, the RF chips are arranged as the first RF chip corresponding to the first antenna 321 and the second RF chip corresponding to the second antenna 322. According to the above implementation method, in this example, the first antenna 321 may be arranged to implement the WI-FI function of the antenna component 30, while the second antenna 322 is used to implement the Bluetooth function of the antenna component 30.

As shown in Figs. 3-5, in an embodiment, the dielectric substrate 31 is arranged along the vertical direction, which may also be understood as the dielectric substrate 31 being arranged in a position parallel to the screen 60. In this example, the part of the antenna component 30 used for transmitting and/or receiving RF signals is arranged on the rear side of the backboard 20. Therefore, the first side of the antenna component 30 is connected to the frame body 10 and located on the rear side of the frame body 10, and the second side of the antenna component 30 needs to be arranged to extend to the rear side of the backboard 20, while the first antenna 321 is arranged on the dielectric substrate 31 located on the back side of the backboard 20.

Taking the first antenna 321 used to implement the WI-FI function of the antenna component 30 as an example, the first antenna 321 is a slot antenna. The flat part extending towards the screen 60 direction shown in Figs. 3-5 is a schematic model of the signal transmission and reception region of the slot antenna, which may also be understood as a schematic model of the front clearance region of the slot antenna. It should be understood that the slot antenna is an antenna formed by opening a slot on a conductor surface, and may also be called a slotted antenna. Generally, the slot shape opened by the slot antenna is a long strip shape. Based on the strong directivity of the slot antenna, the signal transmission and/or reception region formed by the slot antenna also forms a relatively flat shape with the constraint of the slot shape. The sentence is as follows.

In order to improve the WI-FI signal transmission and reception effect of the interactive board, the signal transmission and reception direction of the first antenna 321 is arranged to face the front side of the interactive board in this example, that is, the slot antenna is located on the rear side of the backboard 20 and directly facing the backboard 20. According to the above implementation, in order to ensure the structural strength of the interactive board, the production material of the backboard 20 may be metal and processed through sheet metal technology. In order to avoid interference from the metal backboard 20 on the first antenna 321, a first pocket hole 21 is opened at the position on the backboard 20 opposite to the slot antenna, so that the first antenna 321 may transmit and receive RF signals through the first pocket hole 21.

Referring to Figs. 3-8, in the embodiment where the antenna component 30 is fixed to the frame body 10 through the antenna bracket 40, in order to adapt to the structure of the dielectric substrate 31, the antenna bracket 40 needs to be fitted with the frame body 10, and one side thereof also needs to be arranged to extend to the rear side of the backboard 20. In this embodiment, due to the small weight of antenna component 30, the antenna bracket 40 may be made of plastic that is lighter in weight and has weaker structural strength compared with metal. In the solution where the antenna bracket 40 is made of plastic, since plastic is an insulating material, even if the antenna bracket 40 is located between backboard 20 and first antenna 321, the antenna bracket 40 will not interfere with first antenna 321. By using the plastic antenna bracket 40, not only is the problem of fixing antenna component 30 on frame body 10 solved, but also interference with first antenna 321 is avoided.

In the above embodiment, it may be seen that the screen 60 is arranged on the front side of the backboard 20. In an embodiment, the screen 60 includes a display region 61 and a black border region 62 formed around the periphery of the display region 61. The black border region 62 may be a region formed by printing ink on the rear side of the glass panel, which is used to block electronic components located at the edge of the screen 60 and prevent the backlight module from leaking light at the edge of the screen 60. On this basis, the first antenna 321 is arranged directly facing the black border region 62 of the screen 60. In this way, in addition to avoiding the first antenna 321 from being exposed from the display region 61 of the screen 60 and affecting the overall visual effect of the interactive board, it is also possible to avoid interference from components such as liquid crystal panels arranged in the display region 61 to the first antenna 321.

Through the above configuration, with the first pocket hole 21 provided on the backboard 20, the front side of the first antenna 321 has sufficient avoidance region, allowing it to transmit and/or receive signals through the antenna bracket 40 and the screen 60. This not only meets the functional requirements of the antenna component 30, but also ensures that the antenna component 30 will not be exposed from the front and outer sides of the interactive board, and avoids the situation of opening through holes on the front side of the frame body 10, ensuring that the interactive board has a high overall visual effect.

As an implementation that may be independent of the above-mentioned slot antenna, or may be combined with the above-mentioned implementation of the slot antenna scheme, in this implementation, the second unit is a steel plate antenna, and the block shaped parts located on the front and rear sides of the dielectric substrate 31 in the diagram are schematic models of the signal transmission and reception region of the steel plate antenna, which may also be understood as schematic models of the clearance region on both sides of the steel plate antenna. The steel sheet antenna may be formed by stamping, which has the advantage of fully utilizing various irregular surfaces in three-dimensional space and reducing the antenna volume. Due to the weak directivity of the steel sheet antenna, it may be arranged on the front or rear sides of the dielectric substrate 31. In this example, the steel sheet antenna is located on the rear side of the frame body 10.

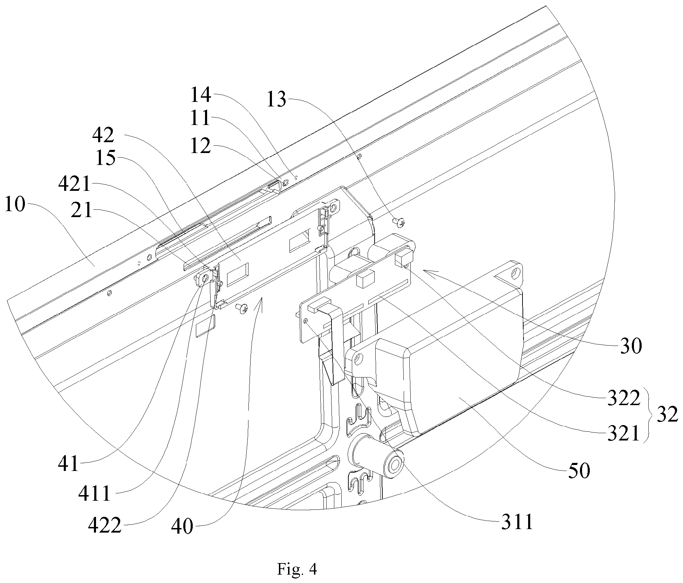

In the above structure, since the antenna component 30 is externally mounted on the rear side of the frame body 10, the interactive board is located on the upper, lower, and rear sides of the second antenna 322, forming a clear space region. In order to adapt to the characteristic of forming a clearance region in a certain region around the steel plate antenna, as shown in Figs. 4-5, a hollow cavity is formed within the frame body 10. In the embodiment where the frame body 10 is a profile frame, this cavity is an accommodating space inside the profile frame. A second pocket hole 15 is opened at a position opposite to the steel plate antenna on the installation part 11, so that the front side of the second antenna 322 may form a clearance region with the cavity formed by the second pocket hole 15 and the frame body 10.

According to the above embodiment, the upper, lower, and rear sides of the second antenna 322 as a steel plate antenna are not obstructed or interfered by other structural components of the interactive board. The front side of the second antenna 322 may form a clearance region through the second pocket hole 15 and the cavity. Although the distance between the second antenna 322 and the cavity of the antenna body is small, it may already meet the characteristics and requirements of the steel plate antenna, so that the second antenna 322 may provide corresponding signal reception and/or transmission functions normally.

According to any of the above embodiments, since the antenna component 30 of this scheme adopts an external implementation on the frame body 10, the upper, lower, and rear sides of the antenna component 30 are all exposed to the outside of the interactive board when installed on the frame body 10. In order to provide corresponding protection for the antenna component 30, as shown in Figs. 1-5, the interactive board further includes an antenna cover plate 50, and the antenna cover plate 50 is covered on the rear side of the frame body 10. In the state where the antenna cover plate 50 is installed on the frame body 10, a hollow protective cavity is formed between the antenna cover plate 50 and the frame body 10, or between the antenna cover plate 50 and the frame body 10 and the backboard 20, to provide the installation position of the antenna component 30. The cover plate 50 is only formed with a protective cavity between it and the frame body 10, There is still a protective cavity formed between the frame body 10 and the backboard 20, depending on whether the antenna component 30 is only installed on the rear side of the frame body 10 or on the rear side of the frame body 10 and the backboard 20.

**In** the embodiment where the antenna component 30 is only provided on the rear side of the frame body 10, the antenna cover plate 50 is at least partially covered on the rear side of the frame body 10, and the antenna cover plate 50 cooperates with the frame body 10 to enclose the periphery of the antenna component 30; in the embodiment where the antenna component 30 is arranged on the rear sides of the frame body 10 and the backboard 20, the antenna cover plate 50 is at least partially covered on the rear side of the frame body 10 and the backboard 20, and the antenna cover plate 50 cooperates with the frame body 10 and the backboard 20 to enclose the periphery of the antenna component 30.

In order to avoid interference with antenna component 30 caused by the presence of antenna cover plate 50, a clearance 51 is formed between the plate wall of the antenna cover plate 50 and the antenna component 30 to ensure sufficient clearance region between the antenna cover plate 50 and the antenna component 30, meeting the functional requirements of the antenna component 30. Moreover, the antenna cover plate 50 needs to be made of materials that do not have signal shielding function (such as plastic) to avoid shielding and interference to the signal of the antenna component 30 when it is covered outside the antenna component 30.

In summary, according to this implementation method, by arranging the antenna component 30 externally on the rear side of the frame body 10, in order to avoid arrangement of pocket holes on the front side of the frame body 10 (the appearance surface of the interactive board) while meeting the functional requirements of the antenna component 30. This improves the structural strength of the frame body 10 and even the entire interactive board, as well as the overall visual effect of the product. Moreover, it allows the interactive board to continue the concept of narrow frame design and meet the usage needs of different user groups.

In the description, it should be understood that the terms "up", "down", "left", "right" and other directional or positional relationships are based on the directional or positional relationships shown in the accompanying drawings, only for the convenience of description and simplification of operation, and do not indicate or imply that the device or component referred to must have a specific orientation, be constructed and operated in a specific orientation, and therefore cannot be understood as a limitation of the present disclosure. In addition, the terms "first" and "second" are only used to distinguish in description and do not have any special meaning.

In the description, the reference to the terms "an embodiment", "example", etc. means that the specific features, structures, materials, or characteristics described in conjunction with the embodiment or example are included in at least one embodiment or example of the present disclosure. In this description, the illustrative expressions of the above terms may not necessarily refer to the same embodiments or examples.

In addition, it should be understood that although this description is described according to the embodiment, not each embodiment only contains an independent technical solution. This description in the description is only for clarity, and those skilled in the art should consider the description as a whole. The technical solutions in each embodiment may also be appropriately combined to form other embodiments that those skilled in the art can understand.

The technical principle of the present disclosure is described above in conjunction with specific embodiments. These descriptions are only intended to explain the principles of the present disclosure and cannot be interpreted in any way as limiting the scope of protection of the present disclosure. Based on the explanation here, those skilled in the art do not need to exert creative labor to associate with other specific embodiments of the present disclosure, which will fall within the scope of protection of the present disclosure.

## Claims

1. An interactive board, comprising:
a frame body (10);
a backboard (20) fixedly connected with the frame body (10), wherein the frame body (10) is at least partially located on an outer side of the backboard (20), so that a rear side of the frame body (10) is at least partially exposed from the outer side of the backboard (20) and forms an installation part (11); and
an antenna component (30) installed on the installation part (11), wherein the antenna component (30) is completely blocked by the frame body (10), or the frame body (10) and the backboard (20) in a main viewing direction of the interactive board.

2. The interactive board of claim 1, wherein an antenna bracket (40) is provided between the antenna component (30) and the frame body (10), and the antenna component (30) is mounted on the mounting part (11) through the antenna bracket (40);
a front side of the antenna bracket (40) is fixedly fitted with the frame body (10), and the antenna component (30) is installed on a rear side of the antenna bracket (40).

3. The interactive board of claim 2, wherein a first fixing structure is provided between the antenna bracket (40) and the frame body (10), and the antenna bracket (40) is removably installed on the installation part (11) through the first fixing structure;
the first fixing structure is at least partially exposed from the rear side of the interactive board in a state where the antenna component (30) is fitted with the antenna bracket (40).

4. The interactive board of claim 3, wherein the first fixing structure comprises:
threaded holes (12) opened on the frame body (10) and located on opposite sides of the installation part (11);
fixing arms (41) respectively arranged on opposite sides of the antenna bracket (40), wherein a first end of the fixing arm (41) is fixed to the antenna bracket (40), and a second end of the fixing arm (41) extends along an outer direction of the antenna bracket (40), a positioning hole (411) is provided throughout the fixing arm (41), and the positioning hole (411) is aligned and fitted with the threaded hole (12); and
a fixing screw (13) having a threaded section that is connected to the threaded hole (12) through the positioning hole (411), wherein a screw head of the fixing screw (13) is larger than the positioning hole (411).

5. The interactive board of any one of claims 2-4, wherein a first positioning convex part (412) and a first positioning concave part (14) are provided between the frame body (10) and the antenna bracket (40), the first positioning convex part (412) is structurally adapted to the first positioning concave part (14), and the antenna bracket (40) and the frame body (10) are positioned and fitted with each other through the first positioning convex part (412) and the first positioning concave part (14);
the first positioning convex part (412) is arranged on the antenna bracket (40), and the first positioning concave part (14) is arranged on the installation part (11); or
the first positioning convex part (412) is arranged on the installation part (11), and the first positioning concave part (14) is arranged on the antenna bracket (40).

6. The interactive board of claim 2, wherein the antenna component (30) comprises:
a dielectric substrate (31), wherein the antenna component (30) is mounted on the antenna bracket (40) through the dielectric substrate (31); and
an antenna unit (32) installed on the dielectric substrate (31);
the rear side of the antenna bracket (40) is provided with a fixing groove (42) that is structurally adapted to the dielectric substrate (31), and the dielectric substrate (31) is accommodated in the fixing groove (42).

7. The interactive board of claim 6, wherein the antenna bracket (40) is located on the fixing groove (42) and is provided with a second fixing structure, and the dielectric substrate (31) is removably installed on the fixing groove (42) through the second fixing structure.

8. The interactive board of claim 7, wherein the second fixing structure is a buckle structure (421) arranged on the fixing groove (42), and the dielectric substrate (31) and the antenna bracket (40) are fitted with each other through the buckle structure (421);
an installation gap (4213) is formed between the buckle structure (421) and the groove bottom of the fixing groove (42), and the dielectric substrate (31) is fixed in the installation gap (4213) through the buckle structure (421).

9. The interactive board of claim 7, wherein a second positioning convex part (422) and a second positioning concave part (311) are provided between the frame body (10) and the dielectric substrate (31), the second positioning convex part (422) is structurally adapted to the second positioning concave part (311), and the antenna bracket (40) and the dielectric substrate (31) are positioned and fitted with each other through the second positioning convex part (422) and the second positioning concave part (311);
the second positioning convex part (422) is arranged on the antenna bracket (40), and the second positioning concave part (311) is arranged on the dielectric substrate (31); or
the second positioning convex part (422) is arranged on the dielectric substrate (31), and the second positioning concave part (311) is arranged on the antenna bracket (40).

10. The interactive board of claim 1, wherein the antenna component (30) comprises:
a dielectric substrate (31), wherein the antenna component (30) is mounted on the antenna bracket (40) through the dielectric substrate (31); and
an antenna unit (32) arranged on the dielectric substrate (31), wherein the antenna unit (32) includes a first antenna (321) and a second antenna (322).

11. The interactive board of claim 10, wherein a first side of the antenna component (30) is located on a rear side of the frame body (10), and a second side of the antenna component (30) extends to a rear side of the back plate (20);
the first antenna (321) is a slot antenna, the slot antenna is located on the rear side of the backboard (20) and directly facing the backboard (20), a first pocket hole (21) is opened at a position on the backboard (20) opposite to the slot antenna.

12. The interactive board of claim 10, wherein the second unit is a steel sheet antenna, the steel sheet antenna is located on a rear side of the frame body (10);
a hollow cavity is formed within the frame body (10), and a second pocket hole (15) communicating to the cavity is opened at a position on the installation part (11) opposite to the steel antenna.

13. The interactive board of claim 1, wherein the interactive board further comprises an antenna cover plate (50),
wherein the antenna cover plate (50) is at least partially covered on a rear side of the frame body (10), the antenna cover plate (50) cooperates with the frame body (10) to enclose the periphery of the antenna component (30); or, the antenna cover plate (50) is at least partially covered on the rear sides of the frame body (10) and the backboard (20), and the antenna cover plate (50) cooperates with the frame body (10) and the backboard (20) to enclose the periphery of the antenna component (30);
a clearance (51) is formed between a plate wall of the antenna cover plate (50) and the antenna component (30).
